(19) Europäisches Patentamt
European Patent Office
Office européen des brevets

(11) **EP 4 123 059 A1**

(12) **EUROPEAN PATENT APPLICATION**
published in accordance with Art. 153(4) EPC

(43) Date of publication:
**25.01.2023 Bulletin 2023/04**

(21) Application number: **21771908.7**

(22) Date of filing: **09.03.2021**

(51) International Patent Classification (IPC):
**C25B 11/063** (2021.01)   **C22C 1/08** (2006.01)
**C25B 9/00** (2021.01)   **C25B 11/032** (2021.01)

(52) Cooperative Patent Classification (CPC):
**C22C 1/08; C25B 9/00; C25B 11/032;**
**C25B 11/063;** Y02E 60/36

(86) International application number:
**PCT/JP2021/009231**

(87) International publication number:
**WO 2021/187228 (23.09.2021 Gazette 2021/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.03.2020   JP 2020045655**

(71) Applicant: **Mitsubishi Materials Corporation
Tokyo 100-8117 (JP)**

(72) Inventors:
• **SANO, Yosuke
Saitama-shi, Saitama 330-8508 (JP)**
• **OHMORI, Shinichi
Saitama-shi, Saitama 330-8508 (JP)**

(74) Representative: **Hoffmann Eitle
Patent- und Rechtsanwälte PartmbB
Arabellastraße 30
81925 München (DE)**

(54) **SPONGE TITANIUM SHEET MATERIAL, AND WATER ELECTROLYSIS ELECTRODE AND WATER ELECTROLYSIS APPARATUS**

(57)     This sponge titanium sheet material, which can adequately contact another member, and through which a liquid or gas can satisfactorily flow and diffuse, comprises a titanium or titanium alloy sintered compact, and forms a three-dimensional network structure having through holes which are open in the surface thereof and which are communicated with internal pores, the porosity thereof being in the range of 70-95%, and the average pore diameter being in the range of 50-600 $\mu$m, and the sponge titanium sheet material has a flatness F=w/t calculated from the average thickness t and the curvature amount w.

FIG. 2

```
┌─────────────────────────────┐
│ TITANIUM-CONTAINING SLURRY  │─ S01
│        FORMING STEP         │
└─────────────────────────────┘
              ↓
┌─────────────────────────────┐
│     SHEET MOLDED BODY       │─ S02
│        FORMING STEP         │
└─────────────────────────────┘
              ↓
┌─────────────────────────────┐
│        FOAMING STEP         │─ S03
└─────────────────────────────┘
              ↓
┌─────────────────────────────┐
│      DEGREASING STEP        │─ S04
└─────────────────────────────┘
              ↓
┌─────────────────────────────┐
│      SINTERING STEP         │─ S05
└─────────────────────────────┘
              ↓
┌─────────────────────────────┐
│      FLATTENING STEP        │─ S06
└─────────────────────────────┘
              ↓
( SPONGY TITANIUM SHEET MATERIAL )
```

EP 4 123 059 A1

**Description**

Technical Field

The present invention relates to a spongy titanium sheet material exhibiting excellent flowability of a fluid, such as a liquid or a gas, and excellent contact properties with other members; and a water electrolysis electrode and water electrolysis apparatus composed of the spongy titanium sheet material.

Priority is claimed on Japanese Patent Application No. 2020-045655, filed March 16, 2020, the content of which is incorporated herein by reference.

Background Art

In recent years, the demand for hydrogen is expected to increase as the movement toward the realization of a hydrogen energy-based society is accelerating for a decarbonized society, and development of the technology for producing hydrogen inexpensively and efficiently using renewable energy is required.

Water electrolysis apparatuses are attracting attention as candidates of hydrogen production technology, and there are several types such as solid oxide electrolyzer cells (SOEC) and alkaline water electrolysis apparatuses (AWE). Among them, solid polymer-type (PEM-type) water electrolysis apparatuses have the advantages of being able to operate at about 100°C, and having high electrolysis efficiency and high hydrogen purity at the time of production.

The internal structure and members of a solid polymer-type water electrolysis cell are composed of, for example, from the cathode side, a current collector plate (such as Au plated SUS plate) / gas diffusion layer (electrode): carbon porous material / catalyst layer (Pt/C + ionomer) / ion exchange membrane (polymer material) / catalyst layer (Ir particles + ionomer) / gas diffusion layer (electrode): titanium porous material / current collector plate (such as Au plated SUS plate).

The above-mentioned gas diffusion layer is often called a GDL, but it is also called an electrode because it plays a role in transmitting electrical current to a catalyst layer serving as the reaction site in the water electrolysis reaction.

Examples of the properties required in the gas diffusion layer (electrode) on the anode side include: (1) the necessity of diffusion of liquid water as a raw material and oxygen gas after water electrolysis; and (2) no occurrence of corrosion in a severe corrosive environment during electrolysis. Therefore, a titanium material with excellent corrosion resistance is used in the gas diffusion layer (electrode) on the anode side.

For example, Patent Document 1 proposes a gas diffusion layer using a sintered body of titanium fibers.

However, in the sintered body of titanium fibers as shown in Patent Document 1, an end portion of the fibers is exposed on the surface thereof, which tends to result in irregularities on the surface. Here, since the above-mentioned gas diffusion layer (electrode) is used in a form of being sandwiched between two members having different levels of hardness (soft catalyst layer and hard current collector plate), if the irregularities are generated on the contact surface of the gas diffusion layer (electrode), an extreme stress concentration is likely to occur and the soft catalyst layer is damaged, which makes it unsuitable as an electrode.

Therefore, for example, as shown in Patent Documents 2 and 3, titanium materials in which the surface roughness of the contact surface is improved have been proposed.

Patent Document 2 proposes a material in which a noble metal layer is formed on the surface of a punching metal made of titanium, and the surface roughness (Ra) is 0.5 $\mu$m or less.

Patent Document 3 proposes a sheeted titanium-based porous material having an arithmetic average roughness Ra of at least one side of 8.0 $\mu$m or less.

Citation List

Patent Documents

Patent Document 1: Japanese Unexamined Patent Application, First Publication No. 2004-259457
Patent Document 2: Japanese Unexamined Patent Application, First Publication No. 2019-137891
Patent Document 3: Japanese Patent No. 6485967

Summary of Invention

Technical Problem

Incidentally, since the titanium material described in Patent Document 2 uses a punching metal made of titanium and does not have a three-dimensional network structure, there is a possibility that liquid water as a raw material and oxygen gas after water electrolysis are not sufficiently diffused. Further, since the noble metal layer is formed, there is a problem of greatly increased cost.

Moreover, in the titanium material described in Patent Document 3, an electrode having a porosity of 50 to 70% is produced by spraying a raw material powder having an average particle size of 50 μm or less onto a setter, followed by sintering. However, there is a possibility that the porosity of 70% or more is not be secured, and that liquid water as a raw material and oxygen gas after water electrolysis is not be sufficiently diffused.

On the other hand, in a titanium material composed of a titanium particle sintered body produced through a foaming step, although a porosity of 70% or more can be achieved, warpage or the like is likely to occur, and there is a possibility that the titanium material is not be brought into favorable contact with other members by simply specifying the surface roughness of the contact surface.

The present invention has been made in view of the above circumstances, and has an object of providing a spongy titanium sheet material capable of being brought into sufficient contact with other adjacent members, and capable of satisfactorily circulating and diffusing a fluid, such as a liquid or a gas; and a water electrolysis electrode and a water electrolysis apparatus that are composed of the spongy titanium sheet material.

Solution to Problem

In order to solve such problems and achieve the above object, the spongy titanium sheet material according to the present invention is composed of a sintered body of titanium or a titanium alloy, has a three-dimensional network structure having a communication pore that is open to the surface and communicates with internal pores, and is characterized by having a porosity within a range of 70% or more and 95% or less, an average pore size within a range of 50 μm or more and 600 μm or less, and a flatness F calculated from an average thickness t and a warpage amount w by a formula: $F = w/t$ of 1 or less.

The spongy titanium sheet material having the above configuration makes it possible to satisfactorily circulate and diffuse a fluid, such as a liquid or a gas, since the spongy titanium sheet material forms a three-dimensional network structure having a communication pore that opens to the surface and communicates with the internal pores; and has a porosity within a range of 70% or more and 95% or less, and an average pore size within a range of 50 μm or more and 600 μm or less.

Further, since the flatness F calculated from the average thickness t and the warpage amount w by the formula: $F = w/t$ is set to 1 or less, the spongy titanium sheet material can be brought into favorable contact with other adjacent members.

Here, in the spongy titanium sheet material according to the present invention, it is preferable that the compressive strength (buckling yield strength in compression) is 1 MPa or more.

In this case, the compressive strength is sufficiently high, and even if a compressive load is applied to the spongy titanium sheet material, for example, breakage or the like can be suppressed to enable the stable use thereof.

Further, in the spongy titanium sheet material according to the present invention, the range of the amount of strain in a linear elastic deformation region due to the porous material structure obtained from the compressive strength-strain diagram is preferably 2% or more.

In this case, the amount of strain in the elastic deformation region due to the porous material structure is large, and even when a compressive load is applied, for example, plastic deformation does not easily occur. For this reason, when the spongy titanium sheet material is sandwiched between other members, the other members and the spongy titanium sheet material can be brought into favorable contact with each other.

The water electrolysis electrode according to the present invention is characterized by being composed of the above-mentioned spongy titanium sheet material.

Since the water electrolysis electrode having this configuration is constituted by the above-mentioned spongy titanium sheet material, the flowability of a liquid or a gas is excellent and the contact properties with other members are excellent, so that the contact resistance with other adjacent members (an ion exchange membrane, a catalyst layer, and a current collector plate) can be reduced, and water electrolysis can be performed efficiently and stably.

The water electrolysis apparatus according to the present invention is characterized by including the above-mentioned water electrolysis electrode.

Since the water electrolysis apparatus having this configuration is equipped with the above-mentioned water electrolysis electrode constituted by the spongy titanium sheet material, the flowability of a liquid or a gas is excellent and the contact properties with other members are excellent, so that the contact resistance with other adjacent members (an ion exchange membrane, a catalyst layer, and a current collector plate) can be reduced, and water electrolysis can be performed efficiently and stably.

Advantageous Effects of Invention

According to the present invention, it is possible to provide: a spongy titanium sheet material capable of being brought into sufficient contact with other adjacent members, and capable of satisfactorily circulating and diffusing a fluid, such as a liquid or a gas; and a water electrolysis electrode and a water electrolysis apparatus that are composed of the spongy titanium sheet material.

Brief Description of Drawings

FIG. 1 is an explanatory diagram showing an example of a spongy titanium sheet material according to an embodiment of the present invention.
FIG. 2 is a flow chart showing an example of a method for producing the spongy titanium sheet material shown in FIG. 1.
FIG. 3 is a schematic explanatory diagram of a water electrolysis apparatus according to an embodiment of the present invention.
FIG. 4 is an explanatory diagram showing points measured to determine each average thickness in Examples.
FIG. 5 is an explanatory diagram showing a procedure to obtain a compressive strength and an elastic deformation region from a compressive stress-strain diagram in

Examples.

Description of Embodiments

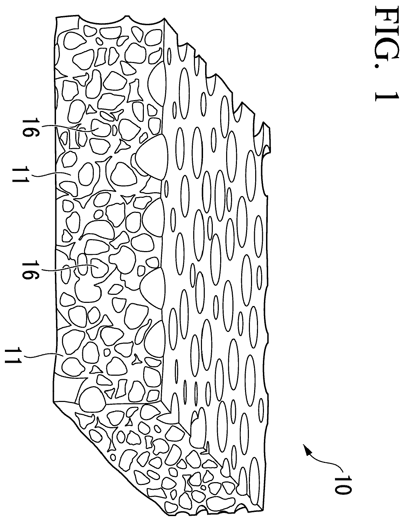

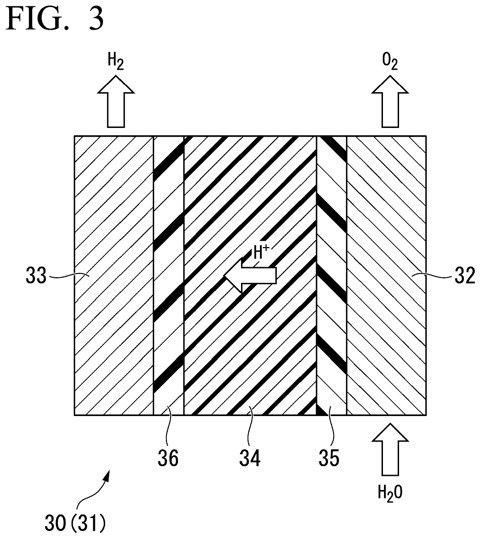

Hereinafter, a spongy titanium sheet material, a water electrolysis electrode and a water electrolysis apparatus according to embodiments of the present invention will be described with reference to the accompanying drawings.
A spongy titanium sheet material 10 of the present embodiment is used as an energizing member of, for example, a cathode electrode of a polymer electrolyte fuel cell (PEFC), an anode electrode of a water electrolysis apparatus, an electrode material of a lithium ion battery or a lithium ion capacitor, or the like.
In the present embodiment, as will be described later, it is used as an electrode constituting a gas diffusion layer (GDL) of a water electrolysis apparatus shown in FIG. 3.
As shown in FIG. 1, the spongy titanium sheet material 10 of the present embodiment is formed into a porous material, and is provided with skeleton portions 11 formed into a three-dimensional network structure, and pore portions 16 surrounded by the skeleton portions 11.
Further, the pore portions 16 surrounded by the skeleton portions 11 communicate with each other and have communication pores that are open toward the outside of the spongy titanium sheet material 10.
The spongy titanium sheet material 10 is composed of, for example, a titanium sintered body obtained by sintering a titanium sintering raw material containing titanium.
Further, the spongy titanium sheet material 10 according to the present embodiment has a porosity P within a range of 70% or more and 95% or less. It should be noted that the porosity P of the spongy titanium sheet material 10 is calculated by the following formula.

$$P\,(\%) = (1 - (W / (V \times DT))) \times 100$$

W: Mass (g) of spongy titanium sheet material 10
V: Volume ($cm^3$) of spongy titanium sheet material 10
DT: True density ($g/cm^3$) of titanium or titanium alloy constituting the spongy titanium sheet material 10

Furthermore, the spongy titanium sheet material 10 according to the present embodiment has an average pore size R within a range of 50 $\mu$m or more and 600 $\mu$m or less. It should be noted that the average pore size R of the spongy titanium sheet material 10 is set, by observing the cross section, to an equivalent circle diameter (diameter) obtained from the cross sectional area of the pore portion 16 in the observed image.
Further, the spongy titanium sheet material 10 according to the present embodiment has a flatness F, calculated from an average thickness t and a warpage amount w by a formula: F = w/t, of 1 or less.
It should be noted that the average thickness t is preferably calculated by cutting out an area of, for example, 40 mm square or more, and then measuring the thickness within a range of 4 points or more at positions 10 mm away from each end portion. Further, the warpage amount w is preferably calculated by subjecting a sample, whose average thickness has been measured, to image processing using a three-dimensional measuring instrument.

The average thickness of the spongy titanium sheet material 10 according to the present embodiment is not limited as long as the flatness F, calculated by the formula: F = w/t, satisfies 1 or less, but is preferably from about 0.1 mm to 5 mm, more preferably from about 0.1 mm to 3 mm, and still more preferably from about 0.3 mm to 2 mm.

Furthermore, in the spongy titanium sheet material 10 according to the present embodiment, the compressive strength (buckling yield strength in compression) is preferably 1 MPa or more.

Moreover, in the spongy titanium sheet material 10 according to the present embodiment, the range of the amount of strain in an elastic deformation region due to the porous material structure obtained from the compressive strength-strain diagram is preferably 2% or more.

Hereinafter, the reasons for specifying the porosity, average pore size, flatness, compressive strength, and amount of strain in the elastic deformation region in the spongy titanium sheet material 10 according to the present embodiment as mentioned above will be described.

(Porosity P)

In the spongy titanium sheet material 10 according to the present embodiment, when the porosity P is less than 70%, there is a possibility that the circulation of gas or liquid is inhibited, resulting in insufficient diffusion. On the other hand, if the porosity P exceeds 95%, the strength may be insufficient, and there is a possibility that breakage easily occurs during handling or use.

Therefore, in the present embodiment, the porosity P of the spongy titanium sheet material 10 is set within a range of 70% or more and 95% or less.

In order to further promote the circulation of gas or liquid, the lower limit of the porosity P is preferably 75% or more, and more preferably 80% or more. On the other hand, in order to further secure the strength of the spongy titanium sheet material 10, the upper limit of the porosity P is preferably 93% or less, and more preferably 90% or less.

(Average pore size R)

In the spongy titanium sheet material 10 according to the present embodiment, when the average pore size R is less than 50 $\mu$m, there is a possibility that the circulation of gas or liquid is inhibited, resulting in insufficient diffusion. On the other hand, if the average pore size R exceeds 600 $\mu$m, the contact points with other members may be insufficient, and the contact resistance may increase.

Therefore, in the present embodiment, the average pore size R of the spongy titanium sheet material 10 is set within a range of 50 $\mu$m or more and 600 $\mu$m or less.

In order to further promote the circulation of gas or liquid, the lower limit of the average pore size R is preferably 100 $\mu$m or more, and more preferably 200 $\mu$m or more. On the other hand, in order to further secure the contact points with other members, the upper limit of the average pore size R is preferably 550 $\mu$m or less, and more preferably 500 $\mu$m or less.

(Flatness F)

In the spongy titanium sheet material 10 according to the present embodiment, if the flatness F calculated from the average thickness t and the warpage amount w by the formula: F = w/t exceeds 1, the contact with other members may become insufficient, and the contact resistance may increase.

Therefore, in the present embodiment, the flatness F of the spongy titanium sheet material 10 is set within a range of 1 or less.

In order to allow more sufficient contact with other members, the flatness F of the spongy titanium sheet material 10 is preferably 0.8 or less, more preferably 0.5 or less, and still more preferably 0.4 or less.

(Compressive strength)

As shown in FIG. 3, for example, since the spongy titanium sheet material 10 according to the present embodiment is used by being sandwiched between other members, a compressive load is applied.

Therefore, when the compressive strength in the spongy titanium sheet material 10 according to the present embodiment is 1 MPa or more, it is not easily damaged even when being sandwiched between other members, and thus can be stably used.

The compressive strength (buckling yield strength in compression) of the spongy titanium sheet material 10 according to the present embodiment is preferably 1.2 MPa or more, and more preferably 1.5 MPa or more.

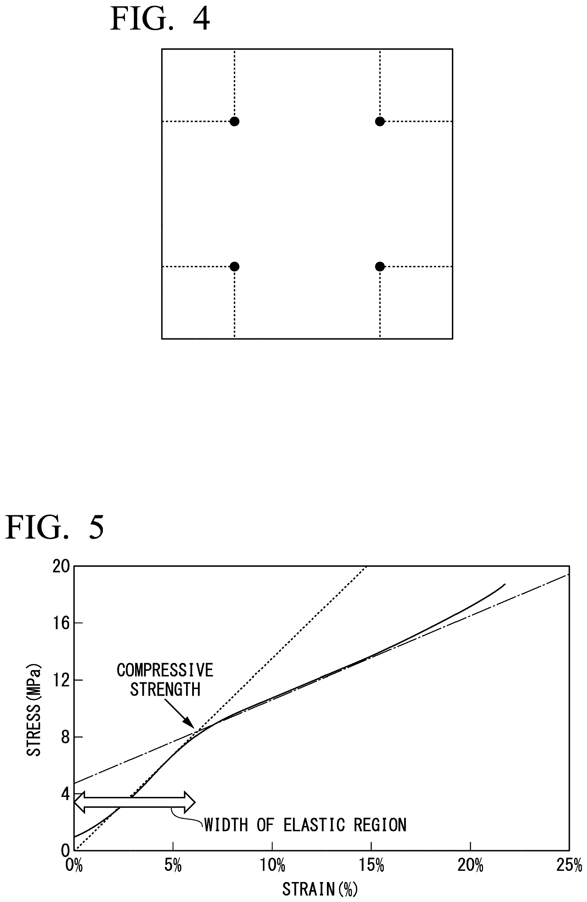

Here, the compressive strength is calculated, as a point of intersection with a linear region in a low strain region and a linear region in a high strain region (see FIG. 5), by cutting out a sample into 2.5 mm squares and measuring a stress-strain curve using a compression tester (Technograph TG-20kNB manufactured by Minebea Co., Ltd.).

(Amount of strain in elastic deformation region)

The spongy titanium sheet material 10 according to the present embodiment is used by being sandwiched between other members as described above. For this reason, when being sandwiched between other members, in order to be brought into favorable contact with other members, it is preferable that the spongy titanium sheet material 10 is elastically deformed without being easily plastically deformed by the compressive load applied from other members.

Therefore, in the spongy titanium sheet material 10 according to the present embodiment, when the range of the amount of strain in the elastic deformation region due to the porous material structure obtained from the compressive strength-strain diagram is 2% or more, the contact with other members further improves.

The amount of strain in the elastic deformation region of the spongy titanium sheet material 10 according to the present embodiment is preferably 4% or more, more preferably 5% or more, and still more preferably 6% or more.

Here, the compressive strength-strain diagram can be obtained by pressurizing a sample cut out into 2.5 mm squares from 0 to 18 MPa using a compression tester (Technograph TG-20kNB manufactured by Minebea Co., Ltd.), and measuring the amount of strain in the spongy titanium sheet material 10 at the time. In the obtained compressive strength-strain diagram, an elastic region in the low strain region due to the bending of the skeletal structure of the titanium porous material, and an inelastic region in the high strain region where the skeletal structure is partially destructed are present.

A linear regression is carried out on the two regions, and the point of intersection is calculated as the compressive strength. The amount of strain in the elastic deformation region due to the porous material structure is the amount of strain at the time of reaching the compressive strength.

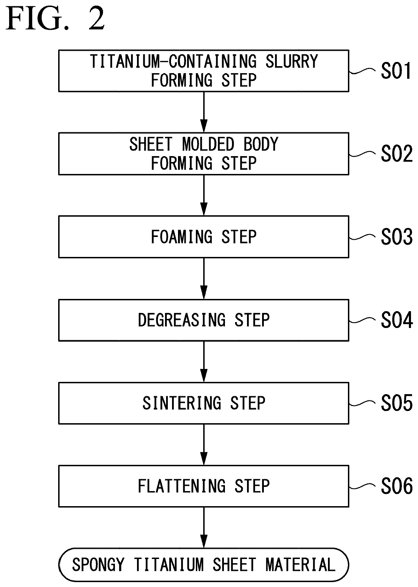

Next, a method for producing the spongy titanium sheet material 10 according to the present embodiment will be described with reference to the flow chart in FIG. 2.

(Titanium-containing slurry forming step S01)

First, a titanium powder composed of titanium or a titanium alloy is prepared as a raw material powder. In the present embodiment, a titanium hydride powder or a pure titanium powder produced by dehydrogenating the titanium hydride powder is prepared.

This raw material powder is mixed with a water-soluble resin binder, an organic solvent, a plasticizer, water as a solvent, and in some cases a surfactant to produce a titanium-containing slurry.

As the water-soluble resin binder, for example, methyl cellulose can be used.

As the organic solvent, for example, neopentane, hexane and butane can be used.

As the plasticizer, for example, glycerin and ethylene glycol can be used.

As the surfactant, for example, an alkylbenzene sulfonate can be used.

The content of the pure titanium powder with respect to the total mass of the titanium-containing slurry is preferably from 50% by mass to 80% by mass, and more preferably from 55% by mass to 75% by mass.

The content of the water-soluble resin binder with respect to the total mass of the titanium-containing slurry is preferably from 1 % by mass to 5% by mass, and more preferably from 2% by mass to 3% by mass.

The content of the organic solvent with respect to the total mass of the titanium-containing slurry is preferably from 1 % by mass to 4% by mass, and more preferably from 2% by mass to 3% by mass.

The content of the plasticizer with respect to the total mass of the titanium-containing slurry is preferably from 1% by mass to 4% by mass, and more preferably from 2% by mass to 3% by mass.

The content of water with respect to the total mass of the titanium-containing slurry is preferably from 20% by mass to 60% by mass, and more preferably from 25% by mass to 50% by mass.

The content of the surfactant with respect to the total mass of the titanium-containing slurry is preferably from 0% by mass to 5% by mass, and more preferably from 1% by mass to 4% by mass.

(Sheet molded body forming step S02)

Next, the above-mentioned titanium-containing slurry is molded into a sheet shape by a doctor blade method or the like to form a sheet molded body.

The thickness of the sheet molded body is preferably from about 0.1 mm to 10 mm, and more preferably from about 0.2 mm to 8 mm.

(Foaming step S03)

Next, the above-mentioned sheet molded body is foamed to produce a spongy green molded body.

The foaming of the sheet molded body can be carried out by, for example, supplying the sheet molded body to a thermohygrostat bath; and carrying out foaming therein under the condition of holding at a temperature of about 25 to 50°C (preferably 40°C) and a humidity of about 70 to 100% (preferably 90%) for about 3 to 30 minutes (preferably 20 minutes), followed by hot air drying under the condition of holding at a temperature of about 30 to 90°C (preferably 80°C) for about 5 to 300 minutes (preferably 15 minutes).

(Degreasing step S04)

Next, the above-mentioned spongy green molded body is placed on a plate made of zirconia and heated in a vacuum atmosphere to undergo a degreasing treatment, thereby obtaining a degreased body.

The heating temperature in the degreasing step is preferably from about 200°C to 550°C, and more preferably from about 350°C to 500°C.

The heating time in the degreasing step is preferably from about 1 minute to 200 minutes, and more preferably from about 2 minutes to 15 minutes.

(Sintering step S05)

Next, the above-mentioned degreased body is sintered in a vacuum atmosphere, either after being cooled to 50°C or lower in a vacuum atmosphere or without being cooled, to produce a sintered body.

The heating temperature in the sintering step is preferably, for example, from about 1,000°C to 1,300°C, and more preferably from about 1,120°C to 1,250°C.

The heating time in the sintering step is preferably from about 1 hour to 4 hours, and more preferably from about 2 hours to 3 hours.

(Flattening step S06)

Next, the above-mentioned sintered body is held in a temperature range of 900°C or higher and 1,100°C or lower within a range of 10 minutes or more and 300 minutes or less. By the heat treatment, the warpage of the sintered body can be reduced, and the flatness F can be set to 1 or less.

The spongy titanium sheet material 10 according to the present embodiment will be produced by the above-mentioned production method.

Next, FIG. 3 shows a schematic diagram of the water electrolysis electrode and the water electrolysis apparatus according to the present embodiment. The water electrolysis apparatus of the present embodiment is a solid polymer-type water decomposition apparatus having high electrolysis efficiency and hydrogen purity at the time of production.

As shown in FIG. 3, a water electrolysis apparatus 30 of the present embodiment includes a water electrolysis cell 31 containing: an anode electrode 32 and a cathode electrode 33 which are arranged to face each other; and an ion permeable membrane 34 which is arranged between the anode electrode 32 and the cathode electrode 33. Catalyst layers 35 and 36 are formed on both surfaces of the ion permeable membrane 34 (contact surface with the anode electrode 32 and contact surface with the cathode electrode 33), respectively.

Here, as the cathode electrode 33, the ion permeable membrane 34, and the catalyst layers 35 and 36, those used in a conventional general solid polymer-type water electrolysis apparatus may be applied.

Further, the above-mentioned anode electrode 32 is used as the water electrolysis electrode according to the present embodiment. The anode electrode 32 (water electrolysis electrode) is composed of the spongy titanium sheet material 10 according to the present embodiment described above.

In the above-mentioned water electrolysis apparatus 30 (water electrolysis cell 31), as shown in FIG. 3, water ($H_2O$) is supplied from the side of the anode electrode 32, and the anode electrode 32 and the cathode electrode 33 are energized. By doing so, oxygen ($O_2$) generated by the electrolysis of water is discharged from the anode electrode 32 and hydrogen ($H_2$) is discharged from the cathode electrode 33.

Here, since water (liquid) and oxygen (gas) are circulated in the anode electrode 32 as described above, the anode electrode 32 preferably has a high porosity in order to stably circulate the liquid and gas. In addition, since the anode electrode 32 is exposed to oxygen, excellent corrosion resistance is required. Therefore, the water electrolysis electrode formed of the spongy titanium sheet material 10 according to the present embodiment is particularly suitable as the anode electrode 32.

The spongy titanium sheet material 10 of the present embodiment having the above-described configuration makes it possible to satisfactorily circulate and diffuse a liquid or a gas, since the spongy titanium sheet material 10 forms a three-dimensional network structure having a communication pore that opens to the surface and communicates with the internal pores; and has a porosity P within a range of 70% or more and 95% or less and an average pore size R within a range of 50 μm or more and 600 μm or less.

Further, since the flatness F calculated from the average thickness t and the warpage amount w by the formula: F = w/t is set to 1 or less, the spongy titanium sheet material 10 can be brought into favorable contact with other adjacent members.

In the spongy titanium sheet material 10 according to the present embodiment, when the compressive strength is 1 MPa or more, for example, even if a compressive load is applied to this spongy titanium sheet material 10, breakage or the like can be suppressed to enable the stable use thereof.

Furthermore, in the spongy titanium sheet material 10 according to the present embodiment, when the range of the amount of strain in a linear elastic deformation region obtained from the compressive strength-strain diagram is 2% or more, the amount of strain in the elastic deformation region is large, and plastic deformation does not easily occur even when a load is applied. For this reason, when the spongy titanium sheet material 10 is sandwiched between other members, the other members and the spongy titanium sheet material 10 can be brought into favorable contact with each other.

Furthermore, since the water electrolysis electrode according to the present embodiment is composed of the above-mentioned spongy titanium sheet material 10 and is used as the anode electrode 32, the flowability of a liquid or a gas is excellent and the contact properties with other members are excellent, so that the contact resistance with the adjacent ion permeable membrane 34 and the catalyst layer 36 can be reduced, and water electrolysis can be performed efficiently and stably.

In the water electrolysis apparatus 30 according to the present embodiment, since the water electrolysis electrode composed of the spongy titanium sheet material 10 described above is used as the anode electrode 32, the flowability of a liquid or a gas is excellent and the contact properties with other members are excellent, so that the contact resistance with the adjacent ion permeable membrane 34 and the catalyst layer 36 can be reduced, and water electrolysis can be performed efficiently and stably.

Although embodiments of the present invention have been described above, the present invention is not limited thereto and appropriate modification is possible without departing from the technical idea of the invention.

For example, in the present embodiment, a water electrolysis apparatus (water electrolysis cell) having the structure shown in FIG. 3 has been described as an example, but the present invention is not limited thereto and as long as a water electrolysis electrode composed of the spongy titanium sheet material according to the present embodiment is provided, the water electrolysis apparatus (water electrolysis cell) may have another structure.

Further, the spongy titanium sheet material according to the present invention may be used for purposes other than the water electrolysis apparatus.

Examples

A description will be given below of the results of confirmation experiments conducted in order to confirm the effects of the present invention.

Example 1 of the present invention

Titanium-containing slurry forming step S01

1.5 g of Metolose 90SH (manufactured by Shin-Etsu Chemical Co., Ltd.) as a water-soluble resin binder, 0.8 g of hexane (special grade, manufactured by Kanto Chemical Co., Inc.) as an organic solvent, 0.8 g of glycerin (special grade, manufactured by Kanto Chemical Co., Inc.) as a plasticizer, 0.8 g of sodium laurylbenzenesulfonate (manufactured by Hayashi Pure Chemical Ind., Ltd.) as a surfactant, and 20 g of purified water W-20 (manufactured by Trusco Nakayama Corporation) as a solvent were mixed with 30 g of a pure titanium powder (product name: TC-459, manufactured by Toho Titanium Co., Ltd.) produced by dehydrogenating a titanium hydride powder to produce a titanium-containing slurry.

Sheet molded body forming step S02

The above titanium-containing slurry was molded into a sheet shape having a width of 120 mm, a length of 300 mm, and a thickness of 1.0 mm by a doctor blade method or the like.

Foaming step S03

The above sheet molded body was foamed in a thermohygrostat bath under the condition of holding at a temperature of 40°C and a humidity of 90% for 20 minutes, followed by hot air drying under the condition of holding at 80°C for 15 minutes to produce a spongy green molded body.

Degreasing step S04

The above spongy green molded body was placed on a zirconia plate (Zr series, manufactured by As One Corporation) and heated at 400°C for 100 minutes in a vacuum atmosphere to obtain a degreased body.

Sintering step S05

Next, the above degreased body was cooled to 50°C in a vacuum atmosphere and then sintered at 1,150°C for 180 minutes in a vacuum atmosphere to obtain a sintered body.

Flattening step S06

Next, the above sintered body was held at 1,000°C for 60 minutes to obtain a spongy sheet material (titanium material).

Examples 2 to 5 of the present invention

A titanium material (spongy sheet material) having the porosity, average pore size, average thickness, warpage amount, and flatness shown in Table 1 was produced by the same method as in Example 1 of the present invention. The flattening step S06 was carried out at the treatment temperature for the treatment time shown in Table 1.

Comparative Example 1

A spongy sheet material was obtained by the same method as in Example 1 of the present invention except that the flattening step S06 was not carried out.

Comparative Example 2

A titanium plate (product name: TI-453552, manufactured by the Nilaco Corporation) was punched to obtain a punching metal (40 mm (width) $\times$ 40 mm (length) $\times$ 2.0 mm (thickness)). The diameter of the pores was 5 mm, and the pitch of the pores was 6 mm.

The titanium materials of Examples 1 to 5 of the present invention and Comparative Examples 1 to 2 were evaluated in terms of the following properties.

The evaluation results are shown in Table 1.

(Porosity P)

As described in the section for the embodiment, it was calculated by the following formula.

$$P\,(\%) = (1 - (W\,/\,(V \times DT))) \times 100$$

W: Mass (g) of titanium material
V: Volume ($cm^3$) of titanium material
DT: True density of titanium 4.5 $g/cm^3$

(Average pore size R)

A sample for cross-sectional observation was taken from the above-mentioned titanium material, and a cross-sectional observation image was taken from this sample by scanning electron microscopy or X-ray fluoroscopy. From this image, the equivalent circle diameter (diameter) was calculated from the area of the pore portion.

(Flatness F)

The above-mentioned titanium material was cut out into 40 mm square test pieces, and as shown in FIG. 4, the thickness was measured at four points 10 mm from each end portion of the test piece with a micrometer to calculate the average thickness t.

In addition, the warpage amount w was measured by image processing using a three-dimensional shape measuring device (VL300 manufactured by Keyence Corporation).

Further, the flatness F was calculated from the average thickness t and the warpage amount w by the formula: F = w/t.

(Compressive strength and amount of strain in elastic deformation region)

A compression test was carried out by collecting a measurement sample from the above-mentioned titanium material, and as shown in FIG. 5, a compressive strength-strain curve was obtained to determine the compressive strength and the amount of strain in the elastic deformation region.

The compression test was carried out by pressurizing a sample cut out into 2.5 mm squares from 0 to 18 MPa using a compression tester (Technograph TG-20kNB manufactured by Minebea Co., Ltd.), and measuring the amount of strain in the spongy titanium sheet material 10 at the time.

(Resistance)

Each sample (35 mm × 15 mm) in Examples of the present invention and Comparative Examples was brought into contact with carbon paper and sandwiched between copper plates. The contact resistance was measured by passing through a direct current of 1 A between the carbon paper and the sample in a state where a load of 1 MPa was applied to the copper plates.

[Table 1]

| | | Flattening step | | Titanium material | | | | |
|---|---|---|---|---|---|---|---|---|
| | | Treatment temperature (°C) | Treatment time (min) | Porosity (%) | Average pore diameter (μm) | Average thickness (mm) | Warpage amount (mm) | Flatness |
| Examples of the present invention | 1 | 1,000 | 60 | 70 | 600 | 0.68 | 0.31 | 0.21 |
| | 2 | 900 | 10 | 81 | 50 | 0.45 | 0.35 | 0.15 |
| | 3 | 1,000 | 60 | 81 | 50 | 0.45 | 0.35 | 0.10 |
| | 4 | 1,100 | 300 | 80 | 600 | 1.03 | 0.30 | 0.31 |
| | 5 | 1,100 | 300 | 93 | 300 | 2.51 | 0.19 | 0.47 |
| Comparative Examples | 1 | - | - | 80 | 600 | 1.07 | 1.07 | 1.09 |
| | 2 | - | - | Punching metal | | 2.00 | 0 | 0 |

| | | Evaluation | | |
|---|---|---|---|---|
| | | Compressive strength (MPa) | Amount of strain in elastic deformation region | Resistance (Ω) |
| Examples of the present invention | 1 | 20 or more | 2.0% | 20 |
| | 2 | 8.8 | 6.3% | 20 |
| | 3 | 9.0 | 6.1% | 20 |
| | 4 | 13.1 | 9.5% | 19 |
| | 5 | 1.0 | 5.6% | 19 |
| Comparative Examples | 1 | 12.9 | 9.6% | Unmeasurable |
| | 2 | 20 or more | 1% or less | 20 |

In Comparative Example 1, the flatness exceeded 1 because the flattening process was not performed. During the resistance measurement, the carbon paper was damaged, and the accurate contact resistance value could not be measured. When being incorporated into a cell, there was a possibility of breaking through an ion exchange membrane or the like, making it unsuitable as an electrode.

The material in Comparative Example 2 was composed of a punching metal, and the amount of strain in the elastic deformation region was 1%. Therefore, the shape followability to other members was poor when being incorporated into a cell, making it unsuitable as an electrode.

On the other hand, in Examples 1 to 5 of the present invention in which the flattening process was performed and the flatness was 1 or less, the amount of strain in the elastic deformation region was 2% or more, and the flexibility was excellent. In addition, the porosity was high, and the compressive strength was excellent. Furthermore, the resistance value was sufficiently low.

Industrial Applicability

According to Examples of the present invention, it is possible to provide: a spongy titanium sheet material capable of being brought into sufficient contact with other adjacent members, and capable of satisfactorily circulating and diffusing a fluid, such as a liquid or a gas; and a water electrolysis electrode and a water electrolysis apparatus that are composed of this spongy titanium sheet material.

Reference Signs List

10 Spongy titanium sheet material
30 Water electrolysis apparatus
32 Anode electrode (water electrolysis electrode)

**Claims**

1. A spongy titanium sheet material comprising:

   a sintered body of titanium or a titanium alloy, and
   having a three-dimensional network structure having a communication pore that is open to the surface and communicates with internal pores,
   wherein a porosity is within a range of 70% or more and 95% or less, an average pore size is within a range of 50 $\mu$m or more and 600 $\mu$m or less, and
   a flatness F calculated from an average thickness t and a warpage amount w by a formula: $F = w/t$ is 1 or less.

2. The spongy titanium sheet material according to Claim 1, wherein a compressive strength is 1 MPa or more.

3. The spongy titanium sheet material according to Claim 1 or 2,
   wherein an amount of strain in an elastic deformation region due to a porous material structure obtained from a compressive strength-strain diagram is 2% or more.

4. A water electrolysis electrode comprising a spongy titanium sheet material of any one of Claims 1 to 3.

5. A water electrolysis apparatus comprising a water electrolysis electrode of Claim 4.

FIG. 1

# FIG. 2

TITANIUM-CONTAINING SLURRY
FORMING STEP — S01

↓

SHEET MOLDED BODY
FORMING STEP — S02

↓

FOAMING STEP — S03

↓

DEGREASING STEP — S04

↓

SINTERING STEP — S05

↓

FLATTENING STEP — S06

↓

SPONGY TITANIUM SHEET MATERIAL

# FIG. 3

# FIG. 4

# FIG. 5

| International application No. |
| --- |
| PCT/JP2021/009231 |

A. CLASSIFICATION OF SUBJECT MATTER
C25B 11/063(2021.01)i; C22C 1/08(2006.01)i; C25B 9/00(2021.01)i; C25B 11/032(2021.01)i
FI: C25B11/063; C25B11/032; C25B9/00 A; C22C1/08 C
According to International Patent Classification (IPC) or to both national classification and IPC

B. FIELDS SEARCHED

Minimum documentation searched (classification system followed by classification symbols)
C25B11/063; C22C1/08; C25B9/00; C25B11/032

Documentation searched other than minimum documentation to the extent that such documents are included in the fields searched
Published examined utility model applications of Japan 1922–1996
Published unexamined utility model applications of Japan 1971–2021
Registered utility model specifications of Japan 1996–2021
Published registered utility model applications of Japan 1994–2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | WO 2018/215321 A1 (SUMITOMO ELECTRIC INDUSTRIES, LTD.) 29 November 2018 (2018-11-29) claims, paragraphs [0035]-[0043], [0083] | 1-5 |
| Y | JP 2007-151805 A (MITSUBISHI MATERIALS CORP.) 21 June 2007 (2007-06-21) paragraph [0065] | 1-3 |
| Y | JP 2007-107091 A (MITSUBISHI MATERIALS CORP.) 26 April 2007 (2007-04-26) paragraph [0014] | 1-5 |
| Y | WO 2006/051939 A1 (MITSUBISHI MATERIALS CORP.) 18 May 2006 (2006-05-18) paragraphs [0001]-[0004], [0012]-[0017] | 2-5 |
| Y | WO 2019/176956 A1 (MITSUBISHI MATERIALS CORP.) 19 September 2019 (2019-09-19) claims, paragraphs [0023]-[0053] | 4, 5 |
| P, A | JP 2020-164904 A (MITSUBISHI MATERIALS CORP.) 08 October 2020 (2020-10-08) entire text | 1-5 |

☐ Further documents are listed in the continuation of Box C.  ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| 17 May 2021 (17.05.2021) | 25 May 2021 (25.05.2021) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

**INTERNATIONAL SEARCH REPORT**
Information on patent family members

| International application No. |
|---|
| PCT/JP2021/009231 |

| Patent Documents referred in the Report | Publication Date | Patent Family | Publication Date |
|---|---|---|---|
| WO 2018/216321 A1 | 29 Nov. 2018 | US 2020/0036011 A1 claims, paragraphs [0086]-[0101], [0247] EP 3633075 A1 CN 110536978 A KR 10-2020-0010200 A | |
| JP 2007-151805 A | 21 Jun. 2007 | US 2009/0162235 A1 paragraph [0223] US 2015/0359635 A1 WO 2007/066669 A1 EP 1958650 A1 EP 2982385 A1 CN 101336115 A | |
| JP 2007-107091 A | 26 Apr. 2007 | (Family: none) | |
| WO 2006/051939 A1 | 18 May 2006 | US 2008/0090719 A1 paragraphs [0002]-[0005], [0020]-[0028] EP 1813688 A1 CN 101052733 A | |
| WO 2019/176956 A1 | 19 Sep. 2019 | JP 2019-157273 A | |
| JP 2020-164904 A | 08 Oct. 2020 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020045655 A
- JP 2004259457 A
- JP 2019137891 A
- JP 6485967 B